Europäisches Patentamt

European Patent Office

Office européen des brevets

(11) Veröffentlichungsnummer: **0 437 723 A2**

## (12) EUROPÄISCHE PATENTANMELDUNG

(21) Anmeldenummer: 90123552.3

(22) Anmeldetag: 07.12.90

(30) Priorität: 16.01.90 DE 4000981
16.05.90 DE 4015697

(43) Veröffentlichungstag der Anmeldung:
24.07.91 Patentblatt 91/30

(84) Benannte Vertragsstaaten:
BE DE FR NL

(51) Int. Cl.⁵: **B32B 5/18**, B32B 5/30

(71) Anmelder: HÜLS TROISDORF
AKTIENGESELLSCHAFT
Postfach 11 65
W-5210 Troisdorf(DE)

(72) Erfinder: Schlütter, Aloys
Rheinstrasse 42
W-4152 Kempen 3(DE)

(54) **Kombinationsdichtung.**

㊄ Nach der Erfindung sind an der Deponiebasis Adsorptionsschichten vorgesehen, die im Falle einer Leckage die Leckströmung filtern.

FIG. 3

## KOMBINATIONSDICHTUNG

Die Erfindung betrifft eine Kombinationsdichtung für kontaminierte Bereiche, insbesondere für Deponien, wobei auf einem Deponieplanum eine mehrlagige Dichtung und/oder mehrere Dichtungslagen verlegt werden.

Beim Deponiebau ist seit einiger Zeit vorgeschrieben, daß die Deponiebasis mit einer Kunststoffabdichtung versehen wird. Derartige Kunststoffabdichtungen werden aus einzelnen Abdichtungsbahnen zusammengesetzt. Das hat Herstellungs-, Transport- und Handhabungsgründe. Die einzelnen Abdichtungsbahnen werden so verlegt, daß sie einander an den Rändern überlappen. Dort entsteht durch Verschweißen eine dichte Verbindung.

Die Kunststoffabdichtung ist eingebunden in mineralische Tragschichten, das Deponieplanum, und mineralische Deckschichten. Diese Deckschichten sind zugleich als Filterschichten ausgebildet. Dazu wird in der Regel Kies bestimmter Körnung verwendet.

Auf die so vorbereitete Deponiebasis wird dann das Deponiegut aufgehaldet. Je nach spezifischem Gewicht des Deponiegutes und nach Haldenhöhe ergibt sich eine mehr oder weniger große Pressung. Im Verlauf der Pressung sind Setzungen im Boden zu erwarten. Großflächige Setzungen sind unschädlich. Problematisch sind vor allem Setzungen mit kantenförmigem Verlauf. An der Kante kann die Deponiebasis dem Setzungsverlauf schlecht folgen. Es kommt häufig zu Schäden. Die Schäden führen zu einer Leckage in der Deponieabdichtung. Durch die Leckage tritt Wasser aus der Deponie und gefährdet das Grundwasser. Umgekehrt kann auch Grundwasser in die Deponie eindringen und dadurch kontaminiert werden.

In Kenntnis obiger Zusammenhänge sind verschiedene Konzepte entwickelt worden, wie Leckagen an der Kunststoffabdichtung begegnet werden kann. Verschiedene dieser Konzepte beinhalten eine mehrlagige Abdichtung. Solche Mehrlagigkeit kann mit Hilfe entsprechender, mehrlagiger Abdichtungsbahnen oder auch dadurch erreicht werden, daß mehrere Lagen Abdichtungsbahnen übereinander gelegt werden. Nach einem älteren Vorschlag ist zugleich Bentonitmehl zwischen den Abdichtungsbahnen vorgesehen. Das Bentonitmehl hat die Aufgabe, entstehende Leckagen wieder zu schließen. Das geschieht durch Verstopfen der Durchtrittsöffnung in der Abdichtung.

Die Erfindung geht von der Erkenntnis aus, daß im Falle von Leckagen bis zum Entdecken und Verschließen der Undichtigkeit eine beträchtliche Menge Sickerwasser aus der Deponie in das Grundwasser gelangt oder umgekehrt Grundwasser in die Deponie steigt und dort kontaminiert wird.

Die Erfindung hat sich die Aufgabe gestellt, derartige Kontaminationen zu verhindern. Nach der Erfindung wird das dadurch erreicht, daß eine Lage (Zwischenlage und/oder Decklage und/oder Unterlage) der Abdichtung durch Kohlen gebildet wird oder mit Kohlepartikeln versetzt ist. Die Kohle bildet einen Wasserfilter. Besonders vorteilhafte Filtereigenschaften entstehen bei Verwendung von Anthrazitstaub oder Aktivkohlepellets oder sonstiger Aktivkohle.

Bereits bei relativ geringen Filterkohlenmengen läßt sich die austretende Sickerwassermenge beherrschen. Vorzugsweise ist eine Filterkohlenmenge von 2 000 g/m² und mehr vorgesehen.

Der Anthrazitstaub kann bei geeigneter Körnung bereits aus sich heraus die gleiche Aufgabe erfüllen wie Bentonitmehl. Voraussetzung sind ausreichende feine Partikel.

Als Filterkohlen können handelsübliche Aktivkohlen Verwendung finden. Von Vorteil sind preislich günstige Filterkohlen aus Gasflammkohle und/oder Fettkohle und/oder Anthrazit. Besonders günstig sind Einsatzmischungen mit 70 bis 90 % Anthrazit, 5 bis 20 % Gasflammkohle und/oder Fettkohle. Die Einsatzkohle wird in Suspensionsform zusammen mit Holzmehl und geringen Anteilen an Wachsmaisstärke auf einen Pelletierteller gegeben. Der Pelletierteller ist ein rotierender Teller, auf dem sich die Pellets bilden. Die Pellets werden anschließend getrocknet und einer Wärmebehandlung unterzogen. Anschließend werden die Pellets z. B. im Wirbelschichtofen entgast und aktiviert. Dazu können herkömmliche Aktivierungsgase verwendet werden, die bis zu 35 % aus Wasserdampf bestehen. Die erlangten Pellets haben hervorragende Eigenschaften bei relativ geringen Kosten. Die Pelletgröße ist so gering, daß eine Beschädigung der Abdichtung ausgeschlossen ist.

Kohlenstaub entsteht vorzugsweise durch Mahlung. Dabei bildet sich ein Kornspektrum, bei dem das gesamte Kornspektrum in der Regel festgelegt ist, wenn bereits ein Ausschnitt aus dem Kornspektrum festliegt. In diesem Sinne sind Anthrazitkohlenstäube z. B. für die erfindungsgemäße Verwendung geeignet, die ein Kornspektrum mit 80 % ≦100 my besitzen. Wahlweise wird auch Bentonitmehl zugesetzt, d. h. die Mischung mit dem Anthrazitkohlenstaub verwendet.

Beim Einsatz von Aktivkohlepellets bietet sich auch eine Mischung mit Bentonitmehl oder dergleichen an. Die Aktivkohlepellets bilden die Filterschicht, das Bentonitmehl übernimmt seine alte Funktion als Dichtmittel.

Mit der Kohlenstaubschicht bzw. Kohleschicht können zugleich mehrere andere vorteilhafte Wirkungen erzielt werden:

1. Sofort nach Herstellung des mineralischen Dichtungsplanums kann dieses sicher abgedeckt werden.

2. Der Kohlenstaub nimmt einerseits Feuchtigkeit auf, wirkt jedoch andererseits gleichzeitig als Austrocknungssperre für den Untergrund.

3. Das erfindungsgemäß abgedeckte Planum kann begangen und befahren werden und die Verlegung von jedem beliebigen Zeitpunkt an erfolgen. Das ist ein Vorteil, der aus Kostengründen nicht hoch genug eingeschätzt werden kann.

4. Im Schadensfall läuft in begrenztem Umfang Sickerwasser in die Kohlenstaubschicht. Die Kohlenstaubschicht füllt sich in einem definierten Bereich mit Feststoffen und Ablagerungen aus dem Sickerwasser und dichtet sich danach in relativ kurzer Zeit selbst ab.

5. Die Matte wirkt als Druckpuffer und Verteilungsschicht für die auslaufende Flüssigkeit, so daß es unterhalb der Schadstelle niemals zu Erosionen oder übermäßigen Schadstoffkonzentrationen in der mineralischen Schicht kommen kann.

6. Die austretenden Schadstoffe gelangen nur in stark verdünnter Form mit dem durch die von der Kohle gebildete Adsorptionsschicht dringenden Eluat in die mineralische Schicht.

In obigem Sinne ist die erfindungsgemäße Kohleschicht Deckschicht für die Mineralschicht des Planums. Wahlweise bildet diese Schicht mit einer darüber liegenden Kunststoffabdichtungsbahn eine zweischichtige Abdichtung, wahlweise kann die Kohleschicht auch mit anderen Schichten kombiniert werden oder unten angeordnet sein.

Der Umfang der Adsorptionswirkung ist von der Schichthöhe des Anthrazitstaubes bzw. der Aktivkohlepelletschüttung abhängig. Vorteilhaft ist eine Schichtdicke für den Anthrazitstaub von mindestens 3 mm. Besonders günstige Verhältnisse ergeben sich bei etwa 10 mm.

Die Filterkohlenschicht kann in verschiedener Weise hergestellt werden. Die Erfindung zeigt zwei Möglichkeiten auf. Die eine Möglichkeit besteht darin, die Filterkohle zwischen einem Deckvlies und einer Vliesunterlage einzubinden, wobei beide Vliese miteinander verbunden werden. Üblicherweise erfolgt eine solche Verbindung durch Nadeln. Dabei werden mit Hilfe von Nadeln, die an der Spitze Widerhaken besitzen, Fasern aus dem einen Vlies in das andere gezogen.

Die so entstehenden Textilien mit innenliegender Filterkohle sind wickelfähig. Dadurch besitzen diese Schichten eine günstige Transport-und Handhabungsform.

Ausreichend sind Vliese mit Flächengewichten von mindestens 200 g/m², insbesondere 300 bis 800 g/m². Die Flächengewichte kennzeichnen die Eigenschaften solcher Vliese, vor allem die Festigkeit.

Die Einbettung in ein Kunststoffvlies erleichtert die Verlegung der Kohleschicht auf dem Deponieplanum bzw. sichert den Bestand der Schicht auch beim Begehen und Befahren.

Anstelle der Vliese können auch Gewebe Verwendung finden. Die nach der Erfindung vorgesehene Alternative zu obiger Schicht wird mittels Stegen gebildet, zwischen denen die Filterkohle gehalten wird. Die Stege können von einer Zwischenlage gebildet werden, die vorzugsweise aus Kunststoffschaum besteht. Die Stege entstehen durch Lochen des Kunststoffschaumes. Durch Abdecken der Zwischenlage und durch Kaschieren der Zwischenlage mit einer Unterlage bzw. Decklage kann gleichfalls ein rollfähiges und gut handhabbares Produkt entstehen.

Die Kohle kann auch mit anderen Gitterstrukturen abschnittsweise unterteilt werden. Die Gitter und Streben bilden dann im Abstand voneinander Schotts und verhindern eine Ausbreitung durchdringenden Sickerwassers.

Die erfindungsgemäße Lage, Decklage, Unterlage oder Zwischenlage bildet in den beiden oben erläuterten Alternativen jeweils eine Matte. Es ist von Vorteil, diese Matte mit einer Bentonit-Matte zu kombinieren. Wahlweise werden Bentonit- und Filterkohle auch in einer einzigen miteinander verbunden. Der Aufbau einer solchen Matte kann wie folgt sein:

- Decklage Gewebe
- eine Bentonit-Schicht
- erneut eine Gewebeschicht
- Filterkohle
- zuletzt als Unterlage Gewebe und Vlies

Die zwischenliegende Gewebeschicht hat relativ geringe Festigkeit zu bringen. Hier können Gewebe mit ca. 50 g/m². An die Decklage werden höhere Anforderungen gestellt. Hier empfehlen sich mindestens 200 g/m² als Flächengewicht. Die höchsten Belastungen werden an der Unterlage erwartet. Hier sind Gewebe und Vlies mit mindestens 600 g/m² von Vorteil.

In der Zeichnung sind verschiedene Ausführungsbeispiele der Erfindung dargestellt.

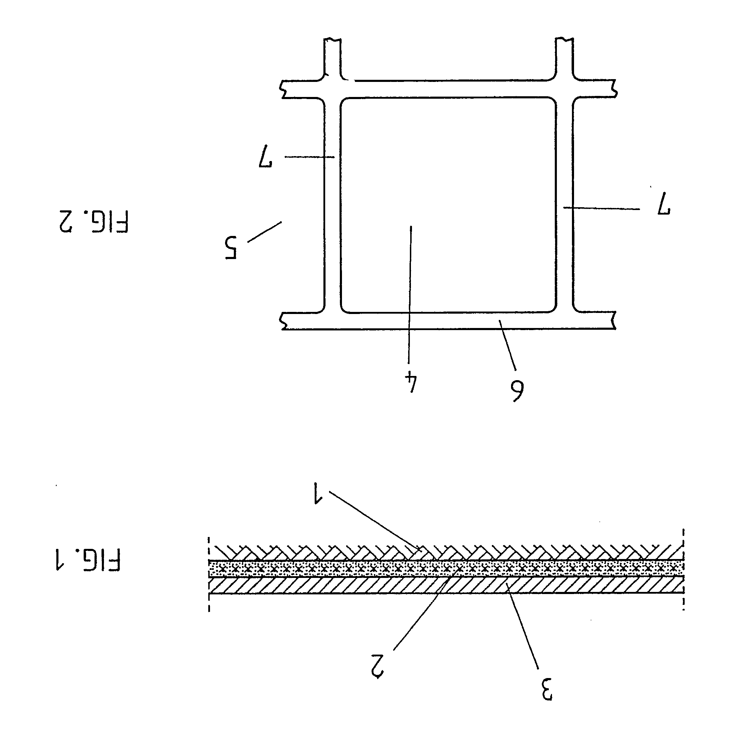

Die Fig. 1 zeigt ein Deponieplanum 1, welches durch eine feinkörnige mineralische Schüttung gebildet wird. Darauf ist eine Deckschicht 2 vorgesehen, welche durch ein Kunststoffaservlies gebildet wird. Die Porenhohlräume des Kunststoffaservliesses sind weitgehend mit Anthrazitkohlenstaub ausgefüllt. Der Anthrazitkohlenstaub ist durch Mahlung entstanden. Die Körnung ist derart, daß 80 % der Kohlenstaubpartikel ≦100 my sind.

Das Kunststoffaservlies hat eine Dicke von 5 mm. Über dem Kunststoffaservlies 2 ist eine Kunststoffabdichtung 3 aus Polyäthylenbahnen vorgesehen. Die Polyäthylenbahnen besitzen eine Dicke von 3 mm.

Fig. 2 zeigt eine Ausführungsform, bei der zwischen zwei Kunststoffbahnen eine Gitterkonstruktion vorgesehen ist. Die Gitterkonstruktion besteht im Ausführungsbeispiel aus Längsstreben 6 und Querstreben 7. Jede Gitteröffnung ist mit dem gleichen Kohlenstoff ausgefüllt wie die Porenhohlräume des Kunststoffaservlieses 2 nach Fig. 1.

Sowohl das Kunststoffaservlies 2 als auch die Gitterkonstruktion nach Fig. 2 bilden eine Adsorptionsmatte. Jedes Sickerwasser, daß im Falle einer Leckage durch die Kunststoffabdichtung 3 dringt, wird in der Adsorptionsmatte gereinigt, so daß eine Belastung des Grundwassers vermieden wird. Zugleich bewirken die feinkörnigen Partikel einen Abdichtungsvorgang, wie er von dichtenden Zwischenlagen mit Bentonitmehl bekannt ist. Die Gitterkonstruktion besteht vorzugsweise aus Schaumstoff.

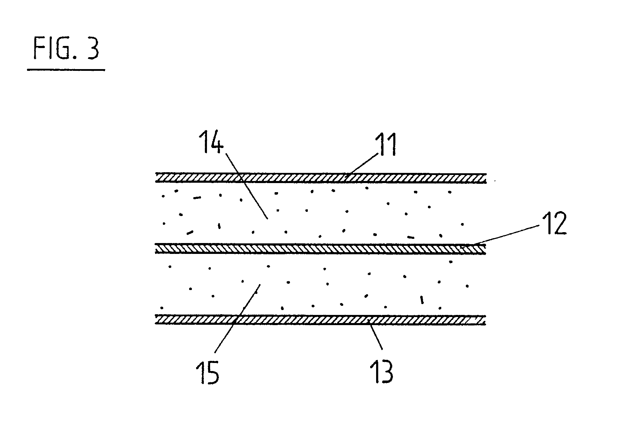

Figur 3 zeigt eine Zwei-Lagen-Kombinationsmatte, die aus einer oberen Gewebeschicht 11 mit 300 g/m² Flächengewicht, einer Bentonit-Schicht 14, einer zwischenliegenden Gewebeschicht 12 mit 100 g/m² Flächengewicht, einer Schicht 15 aus Filterkohlen-Pellets und einer Gewebe- und Vliesschicht 13 mit einem Flächengewicht von 800 g/m² besteht. Im Ausführungsbeispiel hat die Bentonit-Schicht die zusätzliche Aufgabe einer Abdichtung. Dem Sickerwasser steht ein erheblicher Strömungswiderstand entgegen. Darüber hinaus geht von dem Bentonit eine deutliche Reparaturwirkung aus. Das Bentonit in Mehlform wird von durchdringendem Sickerwasser mitgeschwemmt und verstopft die entstandenen Strömungswege.

Im Ausführungsbeispiel läuft das aus einer Leckage resultierende Sickerwasser in die Filterkohlenschicht 15. Dort wird es gereinigt und kann gefahrlos ins Grundwasser austreten.

Wahlweise wird die Filterkohle mit einer Kunststoffmatte gehalten, die mit Löchern versehen ist. Löcher werden mit Filterkohle gefüllt. Die nach Lochen der Matte verbliebenen Stege der Matte halten die Filterkohle zusammen. Wahlweise wird die Matte nach Befüllen mit Filterkohle oben und unten mit einer Decklage bzw. Unterlage versehen, so daß die Filterkohle in der Matte eingeschlossen wird. Die Decklage kann aus einem mit der Matte verschweißbaren oder verklebbaren Kunststoff bestehen.

**Patentansprüche**

1. Kombinationsdichtung für kontaminierte Bereiche, insbesondere für Deponien, wobei auf einem Deponieplanum eine mehrlagige Dichtung und/oder mehrere Dichtungslagen verlegt werden, dadurch gekennzeichnet, daß eine Lage eine Filterkohlenschicht besitzt.

2. Kombinationsdichtung nach Anspruch 1, gekennzeichnet durch die Verwendung von Anthrazitstaub und/oder Aktivkohlepellets.

3. Kombinationsdichtung nach Anspruch 1 oder 2, dadurch gekennzeichnet, daß die Filterkohlenschicht eine Dicke aufweist, die zu einem Flächengewicht von 2 000 g/m² führt.

4. Kombinationsdichtung nach einem oder mehreren der Ansprüche 1 - 3, dadurch gekennzeichnet, daß die Decklage bzw. Unterlage oder Zwischenschicht aus einem obenliegenden Vlies und einem untenliegenden Vlies besteht und die Filterkohle zwischen beiden Vliesen angeordnet ist, wobei die Vliese miteinander vernadelt sind.

5. Kombinationsdichtung nach Anspruch 4, gekennzeichnet durch eine Gitterkonstruktion, bei der die Gitterhohlräume mit Filterkohle gefüllt sind.

6. Kombinationsdichtung nach Anspruch 5, dadurch gekennzeichnet, daß die Gitterkonstruktion durch eine gelochte Kunststoffschaummatte gebildet wird.

7. Kombinationsdichtung nach einem oder mehreren der Ansprüche 1 - 6, gekennzeichnet durch die Verbindung mit einer obenliegenden Bentonit-Schicht.

8. Kombinationsdichtung nach Anspruch 7, dadurch gekennzeichnet, daß die Schichthöhe des Bentonit-Mehls mindestens 3 mm beträgt.

FIG. 1

FIG. 2

## FIG. 3